# EUROPEAN PATENT APPLICATION

(11) **EP 2 006 947 A2**
(43) Date of publication of application: **24.12.2008**
(21) Application number: 07740965.4
(22) Date of filing: 04.04.2007
(51) Int. Cl.: H01M 8/06, C01B 3/38, H01M 8/12

(54) **SOLID OXIDE FUEL CELL SYSTEM AND METHOD OF OPERATING THE SAME**

(30) Priority: 07.04.2006 JP 2006106190
(71) Applicant: Nippon Oil Corporation, Tokyo 105-8412 (JP)
(72) Inventor: MIZUNO, Yasushi, Yokohama-shi, Kanagawa 231-0815 (JP); SADAKANE, Osamu, Yokohama-shi, Kanagawa 231-0815 (JP); SUGIURA, Yukihiro, Yokohama-shi, Kanagawa 231-0815 (JP); ANZAI, Iwao, Yokohama-shi, Kanagawa 231-0815 (JP)
(74) Representative: Cabinet Plasseraud
(86) International application number: PCT/JP2007/057529
(87) International publication number: WO 2007/116897

(57) **Abstract**

There are provided an SOFC system using kerosene as a reforming raw material, the SOFC system being capable of effectively cooling the cell and capable of being stably operated with no decreased efficiency, and an operating method thereof. The solid oxide fuel cell system includes reforming means for reforming kerosene to obtain a reformed gas, a methanation catalyst layer disposed downstream of the reforming means and capable of promoting a methanation reaction, cooling means for cooling the methanation catalyst layer, and a solid oxide fuel cell disposed downstream of the methanation catalyst layer. The operating method of a solid oxide fuel cell system includes reforming kerosene to obtain a reformed gas, performing a methanation reaction to increase a methane amount in the reformed gas, and supplying a gas obtained in the methanation to a solid oxide fuel cell.

## Description

### Technical Field

The present invention relates to a solid oxide fuel cell system using kerosene as a reforming raw material.

### Background Art

In a solid oxide fuel cell (hereinafter, as the case may be, referred to as SOFC), a reforming raw material such as kerosene is reformed into a reformed gas containing hydrogen and the reformed gas is supplied to an SOFC as a fuel.

Patent Document 1 discloses a so-called indirect internal reforming-type SOFC having a structure in which a reformer is disposed in the vicinity of an SOFC and they are accommodated in a can.
Patent Document 1: Japanese Patent Laid-Open No. 2002-358997

### Disclosure of the Invention

### Problems to be Solved by the Invention

In an SOFC, as the output increases, the electric current flowing in the cell increases, and heat generation due to the electric resistance of the cell increases. By the heat generation, the cell temperature may possibly exceed a desirable range at increased output.

In the case of an SOFC using methane as a fuel, even if methane is supplied directly to the cell, the methane is reformed on the anode electrode surface and hydrogen is generated, thereby power is generated. Further, since the steam reforming reaction is a reaction involving a large endotherm, by steam-reforming methane in the cell, hydrogen is obtained and simultaneously, the cell can effectively be cooled.

On the other hand, in the case of using a higher-order hydrocarbon such as kerosene as a reforming raw material, when hydrocarbon components whose reforming has not progressed are supplied to an SOFC, whose operation temperature is high, the operation stability is damaged by carbon deposition in some cases. Therefore, a higher-order hydrocarbon such as kerosene is desirably completely converted into a C1 compound (compound of which carbon number is 1). For this purpose, the reforming reaction is performed at a high temperature. The composition of a reformed gas is governed by the equilibrium at the reforming reaction temperature and if the reforming reaction is performed at a high temperature, methane concentration in the reformed gas becomes low. Hence, when a reformed gas into which kerosene is reformed is supplied to an SOFC, the cooling effect by methane reforming in the cell interior as described above can hardly be expected.

If the rise of the cell temperature at increased output cannot be suppressed, the temperature distribution in the cell becomes large and the cell may possibly be broken by thermal shock in some cases. For suppressing an excessive rising of the cell temperature, it is possible to cool the cell by supplying a large amount of feed gases, especially a cathode gas. In this case, however, since much energy is consumed for supplying a large amount of a cathode gas, that is, since an auxiliary machine loss becomes large, the power generation efficiency of an SOFC system decreases.

It is an object of the present invention to provide an SOFC system which utilize kerosene as a reforming raw material, the SOFC system being capable of effectively cooling the cell and capable of being stably operated with no decreased efficiency, and an operating method thereof.

### Means for Solving the Problems

The present invention provides a solid oxide fuel cell system including:
reforming means for reforming kerosene to obtain a reformed gas;
a methanation catalyst layer disposed downstream of the reforming means and capable of promoting a methanation reaction;
cooling means for cooling the methanation catalyst layer; and
a solid oxide fuel cell disposed downstream of the methanation catalyst layer.

The reforming means may include a reforming catalyst layer capable of reforming kerosene.

The methanation catalyst layer may include the same kind of catalyst as the reforming catalyst layer.

The reforming catalyst layer may include a noble metal-based reforming catalyst; and the methanation catalyst layer may comprise a nickel-based reforming catalyst.

The reforming catalyst layer and the methanation catalyst layer may be contained in separate reaction vessels.

The present invention provides an operating method of a solid oxide fuel cell system, the method comprising:
a step of reforming kerosene to obtain a reformed gas;
a methanation step of increasing a methane amount in the reformed gas by methanation reaction; and
a step of supplying a gas obtained from the methanation step to a solid oxide fuel cell.

### Advantages of the Invention

The present invention provides an SOFC system which utilize kerosene as a reforming raw material, the SOFC system being capable of effectively cooling the cell, and capable of being stably operated with no decreased efficiency, and an operating method thereof.

### Brief Description of the Drawing

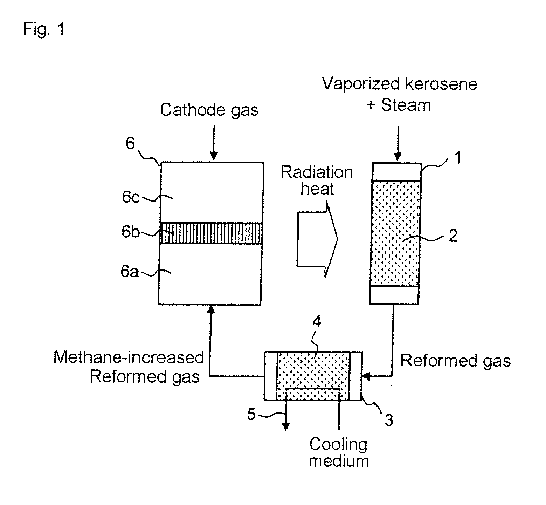

Figure 1 is a schematic diagram illustrating an outline of an example of the SOFC system of the present invention.

### Description of Symbols

- 1: REFORMER
- 2: REFORMING CATALYST LAYER
- 3: METHANATION REACTOR
- 4: METHANATION CATALYST LAYER
- 5: COOLING MEANS
- 6: SOFC
- 6a: ANODE OF THE SOFC
- 6b: SOLID OXIDE ELECTROLYTE OF THE SOFC
- 6c: CATHODE OF THE SOFC

### Best Mode for Carrying Out the Invention

Hereinafter, an embodiment of the present invention will be described by way of the drawing, but the present invention is not limited thereto.

Figure 1 is a schematic diagram illustrating an outline of the SOFC system of the present invention. As shown in Figure 1, kerosene which has been vaporized in advance and steam are supplied to a reformer 1. The reformer has a reforming catalyst layer 2 packed with a reforming catalyst capable of reforming kerosene in a reaction vessel.

Here, as reforming means for reforming kerosene to obtain a reformed gas, a reforming catalyst layer capable of reforming kerosene is used. The reforming catalyst layer may be contained and used in a reaction vessel. However, the case is not limited thereto, and further, the case does not necessarily need to use a catalyst, and for example, a burner for subjecting kerosene to a partial oxidation reforming may be employed. Such a burner may be used with at least its tip contained in a reaction vessel.

In the reformer, kerosene, which is a reforming raw material, is steam-reformed and a reformed gas containing hydrogen is obtained. If the reforming raw material is CₙH₂ₙ₊₂ (n is a natural number), the steam reforming reaction is represented by formula (I). If the reforming reaction is the partial oxidation reaction, the reaction is represented by formula (II).

In the case of using a catalyst in reforming, shift reaction represented by formula (III) may occur in reforming. The shift reaction is an equilibrium reaction which can proceed also in the reverse direction.

In the case of using a catalyst in reforming, the methanation reaction may occur in reforming. The methanation reaction is a reaction to produce methane from hydrogen and carbon monoxide or carbon dioxide, and is represented by formula (IV) or formula (V). Either reaction of formula (IV) and formula (V) is an exothermic reaction, and a lower temperature thereof provides more of methane. Further, either reaction of formula (IV) and formula (V) is an equilibrium reaction which can proceed also in the reverse direction. For example, if the steam/carbon ratio is 3.0; the reforming temperature (reforming catalyst layer outlet temperature) is not less than 700°C; and the reaction pressure is a nearly atmospheric pressure, the methane concentration in the reformed gas at the catalyst outlet in wet condition is as low as about not more than 0.3% by mol.

CₙH₂ₙ₊₂+nH₂O→nCO+(2n+1)H₂ (I)

CₙH₂ₙ₊₂+(n/2)O₂→nCO+(n+1)H₂ (II)

CO+H₂O→CO₂+H₂ (III)

CO+3H₂→CH₄+HO (IV)

CO₂+4H₂→CH₄+2H₂O (V)

A methanation catalyst layer is disposed downstream of the reforming means. Here, a methanation reactor 3 is disposed downstream of the reformer besides the reformer, and they are connected through a pipe arrangement. The methanation reactor has the methanation catalyst layer 4 capable of promoting the methanation reaction, in which methane is generated, in a reaction vessel. The reformed gas obtained by the reforming means is discharged from the reformer, and supplied to the methanation reactor 3. "Downstream" used here denotes "downstream" with respect to the flow of the reformed gas.

In the methanation reactor, the methane amount in the reformed gas is increased by the methanation reaction. For this purpose, the methanation catalyst layer is cooled to make the methanation reaction temperature (methanation catalyst layer outlet temperature) lower than the reforming temperature.

As cooling means for lowering the temperature of the methanation catalyst layer, a heat exchange structure capable of exchanging heat by way of a heat transfer medium may be utilized. For example, a pipe penetrating through the methanation catalyst layer, a pipe installed in the periphery of the methanation catalyst layer, or a combination thereof may be used as cooling means. A cooling medium is made to flow in the pipe and the temperature and flow rate of the cooling medium is controlled, thereby enabling cooling the methanation catalyst layer.

Here the methanation reactor is equipped with a cooling pipe 5 capable of cooling the methanation catalyst layer as the cooling means. More specifically, a pipe penetrating through the methanation catalyst layer is provided. Making the cooling medium flow in the pipe enables cooling the methanation catalyst layer.

As a cooling medium, a fluid which is at a temperature capable of cooling the methanation catalyst layer can be used as appropriate. For example, air is used as a cooling medium; and the methanation catalyst layer is cooled by air, and the air is simultaneously preheated to be utilized for a cathode gas. Further, steam may be used as a cooling medium, and thereby, it is possible to cool the methanation catalyst layer and to preheat the steam to be supplied to the reformer simultaneously.

An SOFC, especially an anode of the SOFC, is connected downstream of the methanation catalyst layer. Here, an SOFC is disposed downstream of the methanation reactor; and the methanation reactor and the anode of the SOFC are connected through a pipe arrangement. "Downstream" used here denotes "downstream" with respect to the flow of the reformed gas (including a reformed gas with an increased methane). The reformed gas with increased methane as described above is supplied to the anode 6a of the SOFC 6 as an anode gas. On the other hand, a cathode gas is supplied to a cathode 6c. As a cathode gas, an oxygen-containing gas such as air is used. Hydrogen in the anode gas and oxygen in the cathode gas electrochemically react through a solid oxide electrolyte 6b, thereby generating power and causing heat generation of the cell.

Methane in the anode gas is steam-reformed into hydrogen in the interior of the SOFC, especially on the anode electrode, and the hydrogen is utilized for the electrochemical reaction. At this time, a large endotherm of the steam reforming reaction effectively cools the cell. Gases discharged from the anode and the cathode are utilized for thermal utilization and the like as appropriate, and thereafter, exhausted out of the system (not shown in the figure).

Here, as heat necessary for the steam reforming reaction in the reformer 1, radiation heat from the SOFC is utilized. That is, a so-called indirect internal reforming-type SOFC is employed here. The reformer is disposed at a location to receive radiation heat from the SOFC. The SOFC and the reformer may be contained in a vessel such as a can. Meanwhile, the present invention can be applied to an SOFC other than the indirect internal reforming-type SOFC.

The methanation reaction temperature is controlled depending on how much cooling is performed by the methane reforming inside the cell. For example, if the methanation reaction temperature (methanation catalyst layer outlet temperature) is about 500°C and the pressure is a nearly atmospheric pressure, the methane concentration in a reformed gas with increased methane can be about 10% by mol (wet base).

When the temperature of the SOFC is in an appropriate range even if methane is not increased, methane does not need to be increased. In this case, it is effective if cooling is not performed by suspending the supply of the cooling medium to the cooling pipe 5, or otherwise. For example, the temperature of the SOFC is monitored, and the amount of the cooling medium supplied may be controlled so that the temperature is in a predetermined range.

As an SOFC, a well-known SOFC of planar type or tubular type may be employed as appropriate. For example, an anode electrode of an SOFC generally contains nickel. In such an SOFC, methane is reformed on the anode electrode surface. In the case of the cell temperature of, for example, not less than 800°C, the cooling effect by methane reforming on the anode electrode surface is remarkable. Although it depends on the cell materials, an SOFC is operated at about not more than 1,000°C in view of prevention of the degradation by heat.

In Figure 1, the reformer and the methanation reactor are installed separately. This is preferable in that the temperature of the methanation catalyst layer is easily controlled independently from the reforming temperature. However, the case is not limited thereto, and a reforming catalyst layer and a methanation catalyst layer may be installed in the interior of a single reaction vessel and cooling means may be installed such as arranging a cooling pipe in the interior of the methanation catalyst layer. In the case of a reforming catalyst being capable of promoting the methanation reaction, the reforming catalyst and a methanation catalyst may be the same catalyst, but in this case, there is no need to distinctly separate the reforming catalyst layer and the methanation catalyst layer, and the catalyst is packed in the interior of a single reaction vessel; cooling means is installed in a portion on the downstream side of the catalyst layer; and reforming kerosene may be performed in a portion on the upstream side thereof and the methanation reaction may be performed in the portion on the downstream side.

In the example shown in Figure 1, as the reforming reaction, the steam reforming reaction is shown, but the case is not limited thereto. As a reforming catalyst capable of reforming kerosene, a steam reforming catalyst, an autothermal reforming catalyst (catalyst having a steam reforming capability and a partial oxidation reforming capability) or a partial oxidation reforming catalyst may be used.

Any well-known catalysts of steam reforming catalysts, autothermal reforming catalysts and partial oxidation reforming catalysts capable of reforming kerosene may be selected and used as appropriate. Examples of the partial oxidation reforming catalyst include a platinum-based catalyst; examples of the steam reforming catalyst include a ruthenium-based catalyst and a nickel-based catalyst; and examples of the autothermal reforming catalyst include a rhodium-based catalyst. With respect to the autothermal reforming catalyst, nickel, noble metals such as platinum, rhodium and ruthenium, and the like are known to have these activities as described in Japanese Patent Laid-Open Nos. 2000-84410 and 2001-80907, "2000 Annual Progress Reports (Office of Transportation Technologies)", and U.S. Patent No 5,929,286. As for a shape of catalyst, a conventionally well-known shape of a pellet form, a honeycomb form or other forms may be employed as appropriate.

As a methanation catalyst, a well-known catalyst capable of promoting methanation reaction can be selected and used as appropriate. For example, a steam reforming catalyst or an autothermal reforming catalyst may be utilized as a methanation catalyst. That is, the reforming catalyst and the methanation catalyst to be used may be the same kind of catalyst. Particularly, the reforming catalyst layer and the methanation catalyst layer may be formed of a single kind of catalyst. This is effective to reduce kinds of materials to be used. Alternatively, a noble metal-based reforming catalyst may be used for the reforming catalyst; and a nickel-based catalyst may be used for the methanation catalyst. The noble metal-based catalyst is a catalyst containing platinum, rhodium or ruthenium, and is excellent in the performance of reforming kerosene. The nickel-based catalyst contains nickel, and is relatively inexpensive because it contains no noble metal. Therefore, use of a combination thereof is preferable in view of the kerosene reforming performance and the cost.

The methanation reactor preferably has a configuration in which a penetrating pipe is installed as the cooling means, and appropriately has a granular catalyst for improving thermal conductivity. As the granular catalyst suitable is a granular catalyst generally used as a methanation catalyst in which a noble metal or nickel is supported on a support obtained by shaping alumina or the like into particles.

From the view point of completely converting kerosene, the reforming temperature (reforming catalyst layer outlet temperature) in the case of using a catalyst is preferably not less than 600°C, more preferably not less than 650°C, still more preferably not less than 700°C. On the other hand, from the view point of suppressing thermal degradation of the reforming catalyst, the reforming temperature is preferably not more than 900°C, more preferably not more than 850°C, still more preferably not more than 800°C.

The steam reforming reaction can be performed in the reaction temperature range of from 450°C to 900°C, preferably from 500°C to 850°C, still more preferably 550°C to 800°C. The amount of steam introduced into the reaction system is defined as a ratio (steam/carbon ratio) of the molar number of water molecules to the molar number of carbon atoms contained in a raw material for manufacturing hydrogen, and this value is preferably from 0.5 to 10, more preferably from 1 to 7, still more preferably from 2 to 5. If the raw material for manufacturing hydrogen is a liquid, the liquid hourly space velocity (LHSV) at this time is represented by A/B where the flow rate of the raw material for manufacturing hydrogen in the liquid state is A (L/h) and the catalyst layer volume is B(L), and this value is set in the range of preferably from 0.05 to 20 h⁻¹, more preferably from 0.1 to 10 h⁻¹, still more preferably from 0.2 to 5 h⁻¹.

In the autothermal reforming, an oxygen-containing gas is added to a raw material in addition to steam. The oxygen-containing gas may be pure oxygen, but is preferably air in view of easy availability. The oxygen-containing gas may be added so as to provide a generated heat amount enough to balance the endothermic reaction involved in the steam reforming reaction, and hold or raise the temperatures of a reforming catalyst layer and an SOFC. The amount of an oxygen-containing gas added is, in terms of a ratio (oxygen/carbon ratio) of the molar number of oxygen molecules to the molar number of carbon atoms contained in a reforming raw material, preferably from 0.05 to 1, more preferably from 0.1 to 0.75, still more preferably from 0.2 to 0.6. The temperature of the autothermal reforming reaction is set in the range of, for example, from 450°C to 900°C, preferably from 500°C to 850°C, more preferably from 550°C to 800°C. If the raw material is a liquid, the liquid hourly space velocity (LHSV) at this time is selected in the range of preferably from 0.1 to 30, more preferably from 0.5 to 20, still more preferably from 1 to 10. The amount of steam introduced in the reaction system is, in terms of steam/carbon ratio, preferably from 0.3 to 10, more preferably from 0.5 to 5, still more preferably from 1 to 3.

In the partial oxidation reforming, an oxygen-containing gas is added to a raw material. The oxygen-containing gas may be pure oxygen, but is preferably air in view of easy availability. For securing the temperature for making the reaction proceed, the addition amount is determined depending on heat loss and the like as appropriate. The amount is, in terms of a ratio (oxygen/carbon ratio) of the molar number of oxygen molecules to the molar number of carbon atoms contained in a raw material for manufacturing hydrogen, preferably from 0.1 to 3, more preferably from 0.2 to 0.7. The reaction temperature of the partial oxidation reaction may be in the range of from 1,000 to 1,300°C in the case of using no catalyst, and in the case of using a catalyst, may be set in the range of from 450°C to 900°C, preferably from 500°C to 850°C, still more preferably from 550°C to 800°C. If the raw material for manufacturing hydrogen is a liquid, the liquid hourly space velocity (LHSV) at this time is selected preferably in the range of from 0.1 to 30. In the case of performing partial oxidation reaction, steam may be introduced for suppressing generation of soot in the reaction system, and the amount is, in terms of steam/carbon ratio, preferably from 0.1 to 5, more preferably from 0.1 to 3, still more preferably from 1 to 2.

### [Other apparatuses]

Well-known components for a fuel cell system having a reformer may suitably be provided, as required, in addition to the above-mentioned apparatuses. Specific examples include a steam generator to generate steam for humidifying a gas supplied to a fuel cell, a cooling system to cool various apparatuses for a fuel cell and the like, pressurizing means for pressurizing various fluids such as a pump, a compressor and a blower, flow rate controlling means and flow path blocking/switching means, such as valves, to control the flow rate of a fluid or to block/switch the flow of a fluid, a heat exchanger to perform heat exchange/heat recovery, a vaporizer to vaporize a liquid, a condenser to condense a gas, heating/temperature-keeping means to externally heat various apparatuses by steam or the like, storing means for various fluids, air systems and electric systems for instrumentations, signal systems for controlling, controllers, and electric systems for output and for power.

### Industrial Applicability

The SOFC system of the present invention can be utilized, for example, for stationary power generation systems or power generation systems for mobile bodies, and cogeneration systems.

## Claims

1. A solid oxide fuel cell system comprising:
reforming means for reforming kerosene to obtain a reformed gas;
a methanation catalyst layer disposed downstream of the reforming means and capable of promoting a methanation reaction;
cooling means for cooling the methanation catalyst layer; and
a solid oxide fuel cell disposed downstream of the methanation catalyst layer.

2. The solid oxide fuel cell system according to claim 1, wherein the reforming means comprises a reforming catalyst layer capable of reforming kerosene.

3. The solid oxide fuel cell system according to claim 2, wherein the methanation catalyst layer comprises the same kind of catalyst as the reforming catalyst layer.

4. The solid oxide fuel cell system according to claim 2, wherein the reforming catalyst layer comprises a noble metal-based reforming catalyst; and the methanation catalyst layer comprises a nickel-based reforming catalyst.

5. The solid oxide fuel cell system according to any one of claims 2 to 4, wherein the reforming catalyst layer and the methanation catalyst layer are contained in separate reaction vessels.

6. A method for operating a solid oxide fuel cell system, the method comprising:
a step of reforming kerosene to obtain a reformed gas;
a methanation step of increasing a methane amount in the reformed gas by methanation reaction; and
a step of supplying a gas obtained from the methanation step to a solid oxide fuel cell.
